# EUROPEAN PATENT SPECIFICATION

(11) **EP 4 040 392 B1**
(45) Date of publication and mention of the grant of the patent: **04.06.2025**
(21) Application number: 22154191.5
(22) Date of filing: 31.01.2022
(51) Int. Cl.: G06T 7/80

(54) **CAMERA CALIBRATION METHOD AND APPARATUS AND ELECTRONIC DEVICE**
KAMERAKALIBRIERUNGSVERFAHREN UND -EINRICHTUNG UND ELEKTRONISCHE VORRICHTUNG
PROCÉDÉ ET APPAREIL D'ÉTALONNAGE DE CAMÉRA ET DISPOSITIF ÉLECTRONIQUE

(30) Priority: 09.02.2021 CN 202110175040
(43) Date of publication of application: 10.08.2022
(73) Proprietor: Shenzhen Goodix Technology Co., Ltd., Shenzhen, Guangdong 518045 (CN)
(72) Inventor: WU, Yonghui, Guangdong, 518045 (CN); YAO, Jinzhu, Shenzhen, 518045 (CN)
(74) Representative: Elzaburu S.L.P.

(56) References cited:
- US-A1- 2013 058 526
- US-A1- 2020 184 684
- US-B1- 10 399 227
- GUANG JIANG ET AL: "Detection of Concentric Circles for Camera Calibration", COMPUTER VISION, 2005. ICCV 2005. TENTH IEEE INTERNATIONAL CONFERENCE ON BEIJING, CHINA 17-20 OCT. 2005, PISCATAWAY, NJ, USA,IEEE, LOS ALAMITOS, CA, USA, vol. 1, 17 October 2005 (2005-10-17), pages 333 - 340, XP010854807, ISBN: 978-0-7695-2334-7, DOI: 10.1109/ICCV.2005.73

## Description

### TECHNICAL FIELD

The present application relates to image processing technologies, and in particular, to a camera calibration method, apparatus and an electronic device.

### BACKGROUND

Parameters of a geometric model of camera imaging are called camera parameters. The camera parameters include camera internal parameters such as focal length and imaging center, and camera external parameters such as rotation matrix and translation matrix. The process of determining the camera internal and external parameters is called camera calibration.

In applications such as image measurement or machine vision, camera calibration is a key part, and the accuracy of a camera calibration result directly affects the accuracy of a result produced by camera operation. When camera calibration is performed, a picture of a calibration object with a solid circle pattern is taken, and image coordinates of the center of the solid circle are further determined, and internal and external parameters of a camera are determined according to the image coordinates of the center of the circle and known world coordinates of the center of the circle. The calibration accuracy is low by adopting this solution.

The document from GUANG JIANG ET AL ("Detection of Concentric Circles for Camera Calibration", TENTH IEEE INTERNATIONAL CONFERENCE ON BEIJING, CHINA 17-20 OCT. 2005) describes an automatic calibration method which relates to detection of concentric circles.

### SUMMARY

The invention is set out in the appended set of claims. The present application provides a camera calibration method, apparatus and an electronic device, by which the accuracy of camera calibration is improved.

In a first aspect, the present application provides a camera calibration method, including:
obtaining a calibration board image, where the calibration board image includes a plurality of annular patterns;
obtaining an inner edge and an outer edge of each annular pattern in the calibration board image;
determining image coordinates of a center point of each annular pattern according to the inner edge and the outer edge of each annular pattern; and
determining internal and external parameters of a camera according to the image coordinates and corresponding world coordinates of the center point of each annular pattern.

In a feasible implementation, the obtaining the inner edge and the outer edge of each annular pattern in the calibration board image includes:
determining an inner edge and an outer edge of each annular pattern in a pixel level according to gray values of pixels in the calibration board image, and determining the inner edge and the outer edge of each annular pattern in the pixel level as the inner edge and the outer edge of each annular pattern.

In a feasible implementation, the obtaining the inner edge and the outer edge of each annular pattern in the calibration board image includes:
determining an inner edge and an outer edge of each annular pattern in a pixel level according to gray values of pixels in the calibration board image; and
performing smoothing processing on the inner edge and the outer edge in the pixel level to obtain an inner edge and an outer edge in a sub-pixel level, and determining the inner edge and the outer edge in the sub-pixel level as the inner edge and the outer edge of each annular pattern.

In a feasible implementation, the determining the image coordinates of the center point of each annular pattern according to the inner edge and the outer edge of each annular pattern includes:
dividing an area between the inner edge and the outer edge of each annular pattern to obtain a plurality of divided blocks;
calculating gravity center of each divided block; and
fitting the gravity centers of the plurality of divided blocks, and determining the image coordinates of the center point of each annular pattern according to a fitting result.

In a feasible implementation, the dividing the area between the inner edge and the outer edge of each annular pattern includes:
dividing the area between the inner edge and the outer edge of each annular pattern according to a normal of the inner edge and/or the outer edge of each annular pattern.

In a feasible implementation, the method further includes:
determining a relative positional relationship between the image coordinates of the center point of each annular pattern in the calibration board image; and
determining a corresponding relationship between the image coordinates and the world coordinates of the center point of each annular pattern according to the relative positional relationship and the predetermined world coordinates of the center point of each annular pattern in the calibration board image.

In a feasible implementation, the determining the internal and external parameters of the camera according to the image coordinates and the corresponding world coordinates of the center point of each annular pattern includes:
determining the internal and external parameters of the camera according to the corresponding relationship between the image coordinates and the world coordinates of the center point of each annular pattern and a mapping relationship between an image coordinate system and a world coordinate system.

In a second aspect, the present application provides a camera calibration apparatus, including:
a first obtaining module, configured to obtain a calibration board image, where the calibration board image includes a plurality of annular patterns;
a second obtaining module, configured to obtain an inner edge and an outer edge of each annular pattern in the calibration board image;
a determining module, configured to determine image coordinates of a center point of each annular pattern according to the inner edge and the outer edge of each annular pattern; and
a calibrating module, configured to determine internal and external parameters of a camera according to the image coordinates and corresponding world coordinates of the center point of each annular pattern.

In a feasible implementation, the second obtaining module is configured to:
determine an inner edge and an outer edge of each annular pattern in a pixel level according to gray values of pixels in the calibration board image, and determine the inner edge and the outer edge of each annular pattern in the pixel level as the inner edge and the outer edge of each annular pattern.

In a feasible implementation, the second obtaining module is configured to:
determine an inner edge and an outer edge of each annular pattern in a pixel level according to gray values of pixels in the calibration board image; and
perform smoothing processing on the inner edge and the outer edge in the pixel level to obtain an inner edge and an outer edge in a sub-pixel level, and determine the inner edge and the outer edge in the sub-pixel level as the inner edge and the outer edge of each annular pattern.

In a feasible implementation, the determining module is configured to:
divide an area between the inner edge and the outer edge of each annular pattern to obtain a plurality of divided blocks;
calculate gravity center of each divided block; and
fit the gravity centers of the plurality of divided block, and determine the image coordinates of the center point of each annular pattern according to a fitting result.

In a feasible implementation, the determining module is configured to:
divide the area between the inner edge and the outer edge of each annular pattern according to a normal of the inner edge and/or the outer edge of each annular pattern.

In a feasible implementation, the calibrating module is configured to:
determine a relative positional relationship between the image coordinates of the center point of each annular pattern in the calibration board image; and
determine a corresponding relationship between the image coordinates and the world coordinates of the center point of each annular pattern according to the relative positional relationship and the predetermined world coordinates of the center point of each annular pattern in the calibration board image.

In a feasible implementation, the calibrating module is configured to:
determine the internal and external parameters of the camera according to the corresponding relationship between the image coordinates and the world coordinates of the center point of each annular pattern and a mapping relationship between an image coordinate system and a world coordinate system.

In a third aspect, the present application provides an electronic device, including: a memory and a processer, and the memory is connected with the processer;
where the memory is configured to store a computer program;
the processer is configured to implement the method according to the first aspect when the computer program is executed.

In a forth aspect, the present application provides a computer-readable storage medium on which a computer program is stored, where when the computer program is executed by a processor, the method according to the first aspect is implemented.

In a fifth aspect, the present application provides a computer program product, including a computer program, where when the computer program is executed by a processor, the method according to the first aspect is implemented.

The present application provides a camera calibration method, apparatus and an electronic device. The pattern of the calibration board is improved, and the calibration board with the annular pattern is used for camera calibration. Because the annular pattern has two edges of the inner circle and the outer circle, the image coordinates of the center point of the annular pattern are jointly determined by these two edges. Compared with the image coordinates of the center determined by the solid circle method, the image coordinates of the center point obtained by using the two edges of the annular pattern in this embodiment are more accurate, so that the calibration result of the camera is more accurate.

### BRIEF DESCRIPTION OF DRAWINGS

In order to explain technical solutions of the embodiments of the present application or the prior art more clearly, drawings that need to be used in the description of the embodiments or the prior art will be briefly introduced in the following. Obviously, the drawings in the following description are some embodiments of the present application, and for those of ordinary skilled in the art, other drawings can be obtained according to these drawings without paying creative effort.
FIG. 1 is a first flow diagram of a camera calibration method provided by an embodiment of the present application;
FIG. 2 is a schematic diagram of a calibration board provided by an embodiment of the present application;
FIG. 3 is a schematic diagram of a calibration board image provided by an embodiment of the present application;
FIG. 4 is a second flow diagram of a camera calibration method provided by an embodiment of the present application;
FIG. 5 is a schematic diagram of a divided annular pattern provided by an embodiment of the present application;
FIG. 6 is a schematic structural diagram of a camera calibration apparatus provided by an embodiment of the present application; and
FIG. 7 is a schematic structural diagram of an electronic device provided by an embodiment of the present application.

### DESCRIPTION OF EMBODIMENTS

In order to make the purpose, technical solutions and advantages of embodiments of the present application clearer, the technical solutions in the embodiments of the present application will be clearly and completely described below in conjunction with the drawings in the embodiments of the present application. Obviously, the described embodiments are part of the embodiments of the present application, rather than all of embodiments. Based on the embodiments in the present application, all other embodiments obtained by those of ordinary skilled in the art without paying creative effort shall fall within the scope of protection of the present application.

In various applications such as image measurement, machine vision and etc., it is often necessary to calculate geometric information of an object in a three-dimensional space from image information obtained by a camera, for example, reconstructing a three-dimensional object, identify depth information of an object, etc. a relationship between a three-dimensional position of a point on surface of an object and a corresponding point of the object in an image is determined by a geometric model imaged by the camera, that is, camera parameters. Therefore, calibration of the camera parameters directly affects the accuracy of a result produced by the camera.

Camera calibration can be realized by means of a three-dimensional or two-dimensional calibration board, the calibration board is used to provide a point with known coordinate information (world coordinates), and also known as a target point. The camera is used to shoot the calibration board, and image coordinates of the target point are extracted by processing the obtained image of the calibration board, and internal and external parameters of the camera are determined based on the image coordinates and world coordinates of each target point. The world coordinate is a world coordinate system based on three-dimensional world defined by users, which is used to describe a position of the calibration board in the three-dimensional world. The image coordinates are image pixel coordinates, which are used to describe positions of pixels in the image. World coordinates and image coordinates are expressed in Cartesian coordinates.

Because of the complexity of production of the three-dimensional calibration board, the two-dimensional calibration board is usually used in practical applications. The calibration board has specific patterns, for example, the calibration board has solid circles arranged at intervals. After the calibration board is placed, the world coordinates of the center of the solid circle on the calibration board (that is, the target point) can be determined. Then, the calibration board is shot by using the camera, the obtained image is processed, the image coordinates of the center of the solid circle in the image are extracted, and then the internal and external parameters of the camera are determined according to the image coordinates and world coordinates of the center of the solid circle.

In the above camera calibration process, because the world coordinates of the target point can be obtained in advance and the world coordinates are relatively accurate, the accuracy of the camera calibration result is mainly determined by the accuracy of the image coordinates of the target point, that is, the more accurate the image coordinates of the target point extracted from the image, the more accurate the camera calibration result is.

However, the accuracy of extracting the image coordinates of the center of the solid circle from the image is usually low when the calibration board with the solid circle pattern is used for the camera calibration. Especially for a camera with low resolution, such as a time of flight (Time of flight, TOF) depth camera, the accuracy of extracting the image coordinates of the center of a solid circle from the image will be lower, which will lead to a more inaccurate calibration result.

In order to improve the accuracy of the camera calibration, the present application provides a camera calibration method, which improves the pattern of the calibration board, and proposes to use the calibration board with an annular pattern to calibrate a camera. Because the annular pattern has two edges from inner circle and outer circle, the inner circle and outer circle are used to jointly determine a center point of the annular pattern, and the obtained image coordinates of the center point are more accurate, and thus a calibration result of the camera is more accurate.

In the following, the camera calibration method provided by the present application will be described in detail through specific examples. It can be understood that the following specific embodiments may be combined with each other, and the same or similar concepts or processes may not be repeated in some embodiments.

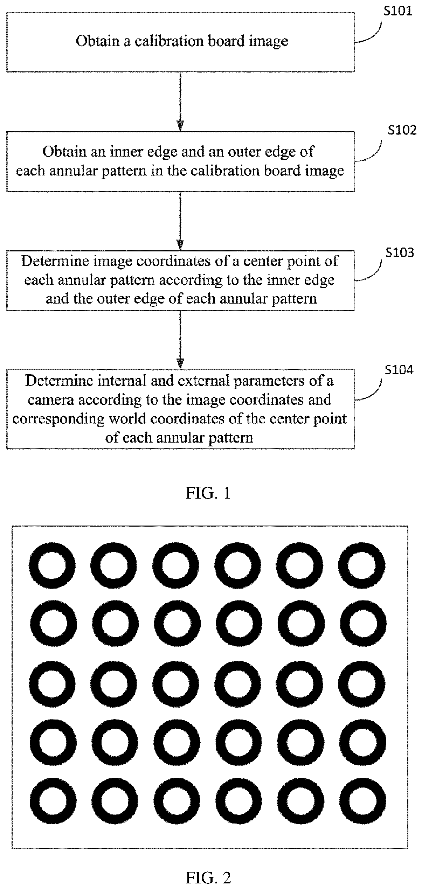

FIG. 1 is a first flow diagram of a camera calibration method provided by an embodiment of the present application. As show in FIG. 1, the method includes:
S101: obtain a calibration board image.

The calibration board image includes a plurality of annular patterns. Exemplarily, the calibration board adopted in the embodiment of the present application has an annular pattern as show in FIG. 2, a background of the calibration board may be white, and the circular annular part may be black. The size of each annular pattern on the calibration board may be the same or different, and intervals between the annular patterns may be the same or different, which is not limited in the embodiment of the present application. In addition, a substrate of the calibration board in this embodiment may be reflective or backlit. When a backlit substrate is used, the substrate of the calibration board is transparent, and a light source is added on the back of the calibration board, which is beneficial to the subsequent image processing and can make the calibration result more accurate.

In order to achieve the camera calibration, the calibration board image needs to include at least three perspectives of the calibration board. There are two ways for the camera to shoot the calibration board. In one way, a calibration board may be shot several times, and the calibration board includes more than four annular patterns. A pose of the calibration board or the camera is adjusted per shooting. In this way, one calibration board may occupy whole field of view of the camera as much as possible, and the number of target points in the calibration board may be more, which is beneficial to improve the calibration accuracy.

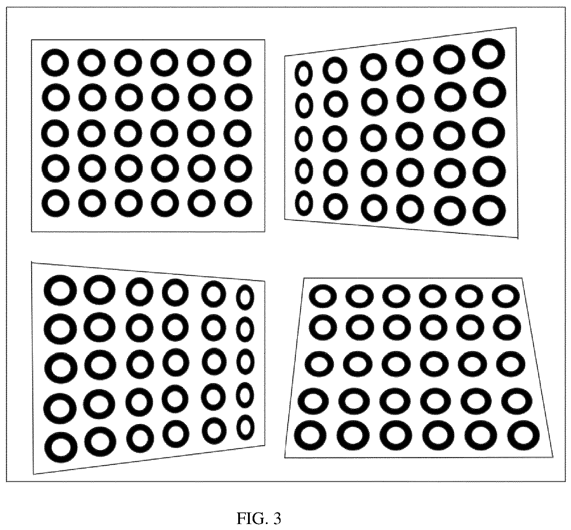

In the other way, a plurality of calibration boards may be shot once, and each calibration board includes more than four annular patterns. Exemplarily, as shown in FIG. 3, the calibration board images obtained by shooting four calibration boards with different poses are shot once. Each calibration board has a different pose, so that a plurality of images of the calibration boards with different perspectives may be obtained by one shot, and the calibration efficiency is high.

S102: obtain an inner edge and an outer edge of each annular pattern in the calibration board image.

S103: determine image coordinates of a center point of each annular pattern according to the inner edge and the outer edge of each annular pattern.

Because the color of the annular pattern in the calibration board is obviously different from the color of the background part of the calibration board, the edge of each annular pattern may be obtained by performing edge detection on the calibration board image, and the edge of the annular pattern includes the inner edge and the outer edge, that is, an inner circle and an outer circle.

A circular annular range of the annular pattern is jointly determined by the inner edge and the outer edge of the annular pattern, so that the image coordinates of the center point of the annular pattern may be jointly determined according to the inner edge and the outer edge.

S104: determine internal and external parameters of a camera according to the image coordinates and corresponding world coordinates of the center point of each annular pattern.

The world coordinates of the center point of each annular pattern can be converted into the image coordinates of the center point of each annular pattern by transformation of a matrix composed of the internal and external parameters of the camera. In this embodiment, since the calibration board is placed in advance according to a certain pose, the world coordinates of the center point of each annular pattern in the calibration board may be determined in advance. Therefore, after the image coordinates of each center point are extracted from the image of the calibration board, the internal and external parameters of the camera can be determined according to the image coordinates and the corresponding world coordinates to complete the calibration of the camera.

According to the camera calibration method provided by this embodiment, the pattern of the calibration board is improved, and the calibration board with the annular pattern is used for camera calibration. Because the annular pattern has two edges from the inner circle and the outer circle, the image coordinates of the center point of the annular pattern are jointly determined by these two edges. Compared with the image coordinates of the center point determined by the solid circle method, the image coordinates of the center obtained by using the two edges of the annular pattern in this embodiment are more accurate, so that the calibration result of the camera is more accurate.

Through the above calibration of the camera, accurate camera parameters can be obtained, which can further make the result produced by the camera operation more accurate. Exemplarily, for a TOF depth camera, after the camera is calibrated, depth information of the subject determined based on the camera parameters will be more accurate.

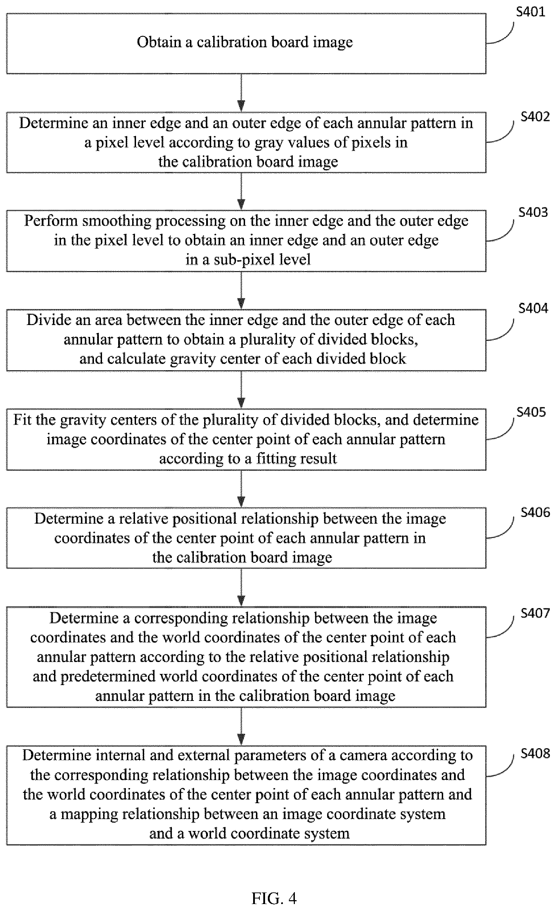

On the basis of the above embodiment, the image coordinates of the center point of each annular pattern extracted from the calibration board image will be further explained. FIG. 4 is a second flow diagram of a camera calibration method provided by an embodiment of the present application. As shown in FIG. 4, the method includes:
S401: obtain a calibration board image.
S401 in this embodiment is similar to S101 in the embodiment shown in FIG. 1, and will not be repeated here.
S402: determine an inner edge and an outer edge of each annular pattern in a pixel level according to gray values of pixels in the calibration board image.

Because the color of the annular pattern in the calibration board is obviously different from the color of the background part of the calibration board, the inner edge and outer edge of the annular pattern can be determined by detecting a gray value of each pixel in the calibration board image and according to gray value change. Exemplarily, through setting a gray change threshold, when the gray scale value change of adjacent pixels is greater than the gray change threshold, the pixel with a lower gray scale value is determined as the pixel at the edge of the annular pattern. Through detecting the gray values of the pixels in the whole calibration board image, the inner edge and outer edge of each annular pattern in the pixel level can be determined.

S403: perform smoothing processing on the inner edge and the outer edge in the pixel level to obtain an inner edge and an outer edge in a sub-pixel level.

For a camera with a lower resolution, that is, a camera with a lower pixel, performing subsequent processing based on the edge in the pixel level may result in a low accuracy. Therefore, in this embodiment, the inner edge and the outer edge in the pixel level are further smoothed. Exemplarily, an interpolation method is used to interpolate the gray values of pixels at the inner edge and outer edge in the pixel level to obtain the inner edge and the outer edge in the sub-pixel level. Exemplarily, the inner edge and the outer edge in the sub-pixel level may also be obtained by fitting the gray values of pixels of the inner edge and the outer edge in the pixel level.

It should be noted that in S403, in order to improve the calibration accuracy, the inner and outer edges of the annular pattern are smoothed to obtain the inner edge and the outer edge in the sub-pixel level. In the actual calibration process, S403 may be executed or skipped as needed. That is, in an implementation, only S401-S402 may be performed, and after determining the inner and outer edges of each annular pattern in the pixel level, the inner and outer edges of each annular pattern in the pixel level will be determined as the inner and outer edges of each annular pattern. In another implementation, S401-S403 are performed, that is, the inner and outer edges of each annular pattern in the sub-pixel level are determined, and the inner and outer edges of each annular pattern in the sub-pixel level are determined as the inner and outer edges of each annular pattern. Thereafter, the subsequent S404-S408 is further performed based on the determined inner edge and outer edge of each annular pattern.

S404: divide an area between the inner edge and the outer edge of each annular pattern to obtain a plurality of divided blocks, and calculate gravity center of each divided block.

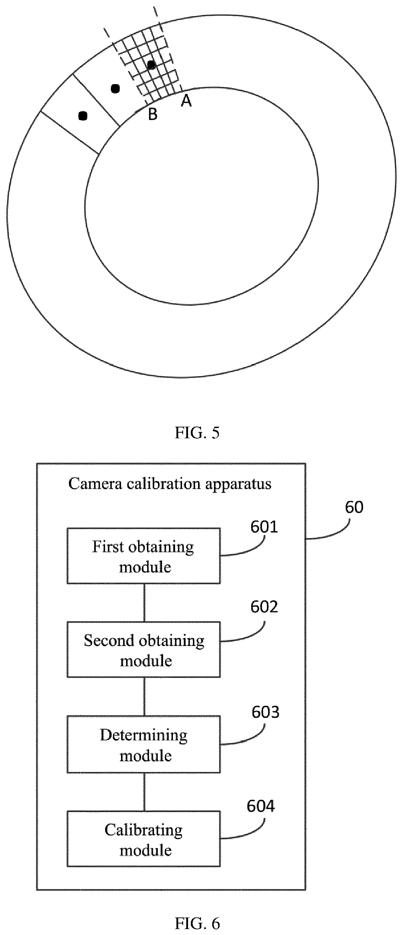

After the inner edge and outer edge of each annular pattern are determined, the annular area between the inner edge and the outer edge is divided, in an implementation, normals at a plurality of positions of the inner edge and/or the outer edge are determined, and the annular area between the inner edge and the outer edge of each annular pattern is divided according to the normals of the inner edge and/or the outer edge of each annular pattern. Taking the normal of the inner edge as an example, the inner edge is divided into a plurality of arc segments. Arc AB shown in FIG 5 is one of the arc segments. Normals of the arc are determined at points A and B respectively (shown by dashed lines in the figure), and the two normals intersect with the outer edge respectively, so that an area represented in a grid shape composed of the two normals and the inner and outer edges is a divided block obtained by division (for clarity, the annular area in FIG 5 is not filled with color). It should be noted that when a circular annular is divided, the size of the divided block may be set as required. Exemplarily, the inner edge is divided into a plurality of arc segments in units of two pixels, and then divided according to the above method.

For each divided block obtained by division, the image coordinates of its gravity center position are calculated. Exemplarily, the gravity center of the divided block may be determined according to the gray value of the divided block through the gray gravity center method. The three points shown in FIG. 5 are the gravity centers of the three divided blocks respectively, and other divided blocks and their gravity centers are not shown in the figure.

S405: fit the gravity centers of the plurality of divided blocks, and determine image coordinates of the center point of each annular pattern according to a fitting result.

After the gravity centers of the plurality of divided blocks are determined, the gravity centers of the plurality of divided blocks are fitted. Exemplarily, the gravity centers of the plurality of divided blocks may be meshed by means of average method, least square method, Gaussian fitting and so on, so as to determine the image coordinates of the center point of the annular pattern.

S406: determine a relative positional relationship between the image coordinates of the center point of each annular pattern in the calibration board image.

Since the camera calibration depends on conversion between the image coordinates and the world coordinates of the target point (the center point of the annular pattern in this embodiment), after the image coordinates of the center point of each annular pattern are extracted, it is necessary to determine a relative positional relationship between the center point of each annular pattern according to values in a horizontal axis and a vertical axis of the coordinates, so as to determine a corresponding relationship between the image coordinates and the world coordinates.

S407: determine a corresponding relationship between the image coordinates and the world coordinates of the center point of each annular pattern according to the relative positional relationship and predetermined world coordinates of the center point of each annular pattern in the calibration board image.

The relative positional relationship between the center point of each annular pattern may be determined according to the image coordinates of the center point of each annular pattern, and then a one-to-one corresponding relationship between the image coordinates and the world coordinates of the center point of each annular pattern may be determined through further combining the predetermined world coordinates of the center point of each annular pattern in the calibration board image.

S408: determine internal and external parameters of a camera according to the corresponding relationship between the image coordinates and the world coordinates of the center point of each annular pattern and a mapping relationship between an image coordinate system and a world coordinate system.

The mapping relationship between the image coordinate system and the world coordinate system consists of internal and external parameter matrices of the camera. When parameter calibration is performed, firstly, a homography matrix corresponding to each calibration board is determined according to the image coordinates and the world coordinates of the center point of the annular pattern in each calibration board, and the internal parameters of the camera are determined by homography matrices of a plurality of calibration boards. Further, the external parameters of the camera are determined by the homography matrix and the internal parameters.

According to the camera calibration method provided by this embodiment, the camera calibration is performed by using the calibration board with the annular pattern. Because the annular pattern has two edges from the inner circle and the outer circle, the image coordinates of the center point of the annular pattern are jointly determined by these two edges. When edge detection is performed, the inner edge and the outer edge in the pixel level may be optimized to obtain the inner edge and the outer edge in the sub-pixel level, thereby the edge accuracy is further improved. It is more accurate to determine the image coordinates of the center point of the annular pattern according to the two high-precision annular edges than to determine the image coordinates of the center of the circle by using the solid circle method, which makes the calibration result of the camera more accurate.

FIG. 6 is a schematic structural diagram of a camera calibration apparatus provided by an embodiment of the present application. As shown in FIG. 6, the camera calibration apparatus 60 includes:
a first obtaining module 601, configured to obtain a calibration board image, where the calibration board image includes a plurality of annular patterns;
a second obtaining module 602, configured to obtain an inner edge and an outer edge of each annular pattern in the calibration board image;
a determining module 603, configured to determine image coordinates of a center point of each annular pattern according to the inner edge and the outer edge of each annular pattern; and
a calibrating module 604, configured to determine internal and external parameters of a camera according to the image coordinates and corresponding world coordinates of the center point of each annular pattern.

In a feasible implementation, the second obtaining module 602 is configured to:
determine an inner edge and an outer edge of each annular pattern in a pixel level according to gray values of pixels in the calibration board image, and determine the inner edge and the outer edge of each annular pattern in the pixel level as the inner edge and the outer edge of each annular pattern.

In a feasible implementation, the second obtaining module 602 is configured to:
determine an inner edge and an outer edge of each annular pattern in a pixel level according to gray values of pixels in the calibration board image; and
perform smoothing processing on the inner edge and the outer edge in the pixel level to obtain an inner edge and an outer edge in a sub-pixel level, and determine the inner edge and the outer edge in the sub-pixel level as the inner edge and the outer edge of each annular pattern.

In a feasible implementation, the determining module 603 is configured to:
divide an area between the inner edge and the outer edge of each annular pattern to obtain a plurality of divided blocks;
calculate gravity center of each divided block;
fit the gravity centers of the plurality of divided block, and determine the image coordinates of the center point of each annular pattern according to a fitting result.

In a feasible implementation, the determining module 603 is configured to:
divide the area between the inner edge and the outer edge of each annular pattern according to a normal of the inner edge and the outer edge of each annular pattern.

In a feasible implementation, the calibrating module 604 is configured to:
determine a relative positional relationship between the image coordinates of the center point of each annular pattern in the calibration board image; and
determine a corresponding relationship between the image coordinates and the world coordinates of the center point of each annular pattern according to the relative positional relationship and the predetermined world coordinates of the center point of each annular pattern in the calibration board image.

In a feasible implementation, the calibrating module 604 is configured to:
determine the internal and external parameters of the camera according to the corresponding relationship between the image coordinates and the world coordinates of the center point of each annular pattern and a mapping relationship between an image coordinate system and a world coordinate system.

The camera calibration apparatus provided by this embodiment may be configured to execute the camera calibration method in the above method embodiment, and their implementation principle and calculation effect are similar, which are not repeated here.

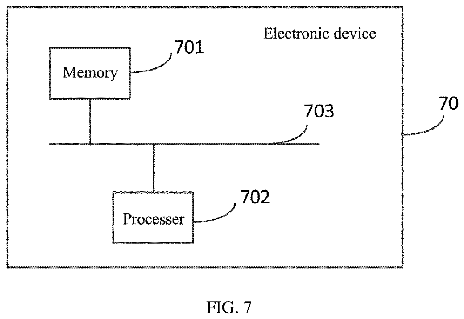

FIG. 7 is a schematic structural diagram of an electronic device provided by an embodiment of the present application. As show in FIG. 7, the electronic device 70 includes a memory 701 and a processer 702, and the memory 701 is connected with the processer 702 by a bus 703.

The memory 701 is configured to store a computer program.

The processer 702 is configured to implement the camera calibration method in the above method embodiments when the computer program is executed.

In an implementation, the electronic device may be a computer device, a server, etc. for processing an image taken by a camera and calculating internal and external parameters of the camera. Alternatively, the electronic device may also be an electronic device with a camera, and the electronic device may calibrate the parameters of its own camera.

The embodiment of the present application further provides a computer-readable storage medium on which a computer program is stored, where when the computer program is executed by a processor, the camera calibration method in the above method embodiment is implemented.

The embodiment of the present application also provides a computer program product, including a computer program, where when the computer program is executed by a processor, the camera calibration method in the above method embodiment is implemented.

It can be understood by those of ordinary skilled in the art that all or part of the steps to implement the above-mentioned method embodiments may be accomplished by hardware related to the program instructions. The aforementioned programs may be stored in a computer-readable storage medium. When the program is executed, the steps including the above-mentioned method embodiments are executed, the aforementioned storage medium includes a read only memory (ROM), a random access memory (RAM), a magnetic disk or an optical disk and other media that can store program codes.

Finally, it should be illustrated that the above embodiments are only used to illustrate the technical solution of the present application, but not to limit it. Although the present application has been described in detail with reference to the foregoing embodiments, those of ordinary skilled in the art should understand that it is still possible to modify the technical solutions described in the foregoing embodiments or to replace some or all of the technical features equivalently thereof. However, these modifications or substitutions do not make the essence of the corresponding technical solutions deviate from the scope of the technical solution of each embodiment of the present application.

## Claims

1. A camera calibration method, comprising:
obtaining (S101) a calibration board image, wherein the calibration board image comprises a plurality of annular patterns;
obtaining (S102) an inner edge and an outer edge of each annular pattern in the calibration board image;
determining (S103) image coordinates of a center point of each annular pattern according to the inner edge and the outer edge of each annular pattern; and
determining (S104) internal and external parameters of a camera according to the image coordinates and corresponding world coordinates of the center point of each annular pattern;
wherein the determining (S103) the image coordinates of the center point of each annular pattern according to the inner edge and the outer edge of each annular pattern comprises:
dividing (S404) an area between the inner edge and the outer edge of each annular pattern to obtain a plurality of divided blocks;
calculating (S404) a gravity center of each divided block; and
fitting (S405) gravity centers of the plurality of divided blocks, and determining the image coordinates of the center point of each annular pattern according to a fitting result.

2. The method according to claim 1, wherein the obtaining (S102) the inner edge and the outer edge of each annular pattern in the calibration board image comprises:
determining (S402) an inner edge and an outer edge of each annular pattern in a pixel level according to gray values of pixels in the calibration board image, and determining the inner edge and the outer edge of each annular pattern in the pixel level as the inner edge and the outer edge of each annular pattern.

3. The method according to claim 1, wherein the obtaining (S102) the inner edge and the outer edge of each annular pattern in the calibration board image comprises:
determining (S402) an inner edge and an outer edge of each annular pattern in a pixel level according to gray values of pixels in the calibration board image; and
performing (S403) smoothing processing on the inner edge and the outer edge in the pixel level to obtain an inner edge and an outer edge in a sub-pixel level, and determining the inner edge and the outer edge in the sub-pixel level as the inner edge and the outer edge of each annular pattern.

4. The method according to any one of claims 1-3, wherein the dividing (S404) the area between the inner edge and the outer edge of each annular pattern comprises:
dividing the area between the inner edge and the outer edge of each annular pattern according to a normal of the inner edge and/or the outer edge of each annular pattern.

5. The method according to any one of claims 1-3, further comprising:
determining (S406) a relative positional relationship between the image coordinates of the center point of each annular pattern in the calibration board image; and
determining (S407) a corresponding relationship between the image coordinates and the world coordinates of the center point of each annular pattern according to the relative positional relationship and predetermined world coordinates of the center point of each annular pattern in the calibration board image.

6. The method according to claim 5, wherein the determining (S104) the internal and external parameters of the camera according to the image coordinates and the corresponding world coordinates of the center point of each annular pattern comprises:
determining (S408) the internal and external parameters of the camera according to the corresponding relationship between the image coordinates and the world coordinates of the center point of each annular pattern and a mapping relationship between an image coordinate system and a world coordinate system.

7. A camera calibration apparatus (60), comprising:
a first obtaining module (601), configured to obtain a calibration board image, wherein the calibration board image comprises a plurality of annular patterns;
a second obtaining module (602), configured to obtain an inner edge and an outer edge of each annular pattern in the calibration board image;
a determining module (603), configured to determine image coordinates of a center point of each annular pattern according to the inner edge and the outer edge of each annular pattern; and
a calibrating module (604), configured to determine internal and external parameters of a camera according to the image coordinates and corresponding world coordinates of the center point of each annular pattern;
wherein the determining module (603) is configured to:
divide an area between the inner edge and the outer edge of each annular pattern to obtain a plurality of divided blocks;
calculate a gravity center of each divided block; and
fit the gravity centers of the plurality of divided blocks, and determine the image coordinates of the center point of each annular pattern according to a fitting result.

8. The apparatus (60) according to claim 7, wherein the second obtaining module (602) is configured to:
determine an inner edge and an outer edge of each annular pattern in a pixel level according to gray values of pixels in the calibration board image, and determine the inner edge and the outer edge of each annular pattern in the pixel level as the inner edge and the outer edge of each annular pattern.

9. The apparatus (60) according to claim 7, wherein the second obtaining module (602) is configured to:
determine an inner edge and an outer edge of each annular pattern in a pixel level according to gray values of pixels in the calibration board image; and
perform smoothing processing on the inner edge and the outer edge in the pixel level to obtain an inner edge and an outer edge in a sub-pixel level, and determine the inner edge and the outer edge in the sub-pixel level as the inner edge and the outer edge of each annular pattern.

10. The apparatus (60) according to any one of claims 7-9, wherein the determining module (603) is configured to:
divide the area between the inner edge and the outer edge of each annular pattern according to a normal of the inner edge and/or the outer edge of each annular pattern.

11. The apparatus (60) according to any one of claims 7-9, wherein the calibrating module (604) is further configured to:
determine a relative positional relationship between the image coordinates of the center point of each annular pattern in the calibration board image; and
determine a corresponding relationship between the image coordinates and the world coordinates of the center point of each annular pattern according to the relative positional relationship and the predetermined world coordinates of the center point of each annular pattern in the calibration board image.

12. The apparatus (60) according to claim 11, wherein the calibrating module (604) is configured to:
determine the internal and external parameters of the camera according to the corresponding relationship between the image coordinates and the world coordinates of the center point of each annular pattern and a mapping relationship between an image coordinate system and a world coordinate system.

13. A computer-readable storage medium on which a computer program is stored, wherein when the computer program is executed by a processor, the method according to any one of claims 1-6 is implemented.

14. A computer program product, comprising a computer program, wherein when the computer program is executed by a processor, the method according to any one of claims 1-6 is implemented.

## Patentansprüche

1. Kamerakalibrierungsverfahren, umfassend:
Erhalten (S101) eines Kalibriertafelbilds, wobei das Kalibriertafelbild eine Vielzahl von ringförmigen Mustern umfasst;
Erhalten (S102) einer Innenkante und einer Außenkante jedes ringförmigen Musters in dem Kalibriertafelbild;
Bestimmen (S103) von Bildkoordinaten eines Mittelpunkts jedes ringförmigen Musters gemäß der Innenkante und der Außenkante jedes ringförmigen Musters; und
Bestimmen (S104) interner und externer Parameter einer Kamera gemäß den Bildkoordinaten und entsprechenden Weltkoordinaten des Mittelpunkts jedes ringförmigen Musters;
wobei das Bestimmen (S103) der Bildkoordinaten des Mittelpunkts jedes ringförmigen Musters gemäß der Innenkante und der Außenkante jedes ringförmigen Musters Folgendes umfasst:
Unterteilen (S404) eines Bereichs zwischen der Innenkante und der Außenkante jedes ringförmigen Musters, um eine Vielzahl von unterteilten Blöcken zu erhalten;
Berechnen (S404) eines Schwerpunkts jedes geteilten Blocks; und
Anpassen (S405) vom Schwerpunkt der Vielzahl von geteilten Blöcken und Bestimmen der Bildkoordinaten des Mittelpunkts jedes ringförmigen Musters gemäß einem Anpassungsergebnis.

2. Verfahren nach Anspruch 1, wobei das Erhalten (S102) der Innenkante und der Außenkante jedes ringförmigen Musters in dem Kalibriertafelbild Folgendes umfasst:
Bestimmen (S402) einer Innenkante und einer Außenkante jedes ringförmigen Musters in einer Pixelebene gemäß Grauwerten von Pixeln in dem Kalibriertafelbild und Bestimmen der Innenkante und der Außenkante jedes ringförmigen Musters in der Pixelebene als die Innenkante und die Außenkante jedes ringförmigen Musters.

3. Verfahren nach Anspruch 1, wobei das Erhalten (S102) der Innenkante und der Außenkante jedes ringförmigen Musters in dem Kalibriertafelbild Folgendes umfasst:
Bestimmen (S402) einer Innenkante und einer Außenkante jedes ringförmigen Musters in einer Pixelebene gemäß Grauwerten von Pixeln in dem Kalibriertafelbild; und
Durchführen (S403) einer Glättungsverarbeitung an der Innenkante und der Außenkante in der Pixelebene, um eine Innenkante und eine Außenkante in einer Subpixelebene zu erhalten, und Bestimmen der Innenkante und der Außenkante in der Subpixelebene als die Innenkante und die Außenkante jedes ringförmigen Musters.

4. Verfahren nach einem der Ansprüche 1 bis 3, wobei das Unterteilen (S404) des Bereichs zwischen der Innenkante und der Außenkante jedes ringförmigen Musters Folgendes umfasst:
Aufteilen des Bereichs zwischen der Innenkante und der Außenkante jedes ringförmigen Musters gemäß einer Normalen der Innenkante und/oder der Außenkante jedes ringförmigen Musters.

5. Verfahren nach einem der Ansprüche 1 bis 3, ferner umfassend:
Bestimmen (S406) einer relativen Positionsbeziehung zwischen den Bildkoordinaten des Mittelpunkts jedes ringförmigen Musters in dem Kalibriertafelbild; und
Bestimmen (S407) einer entsprechenden Beziehung zwischen den Bildkoordinaten und den Weltkoordinaten des Mittelpunkts jedes ringförmigen Musters gemäß der relativen Positionsbeziehung und den vorbestimmten Weltkoordinaten des Mittelpunkts jedes ringförmigen Musters im Kalibriertafelbild.

6. Verfahren nach Anspruch 5, wobei das Bestimmen (S104) der internen und externen Parameter der Kamera gemäß den Bildkoordinaten und den entsprechenden Weltkoordinaten des Mittelpunkts jedes ringförmigen Musters Folgendes umfasst:
Bestimmen (S408) der internen und externen Parameter der Kamera gemäß der entsprechenden Beziehung zwischen den Bildkoordinaten und den Weltkoordinaten des Mittelpunkts jedes ringförmigen Musters und einer Abbildungsbeziehung zwischen einem Bildkoordinatensystem und einem Weltkoordinatensystem.

7. Kamerakalibrierungsvorrichtung (60), umfassend:
Ein erstes Erhaltungsmodul (601), das konfiguriert ist, ein Kalibrierungstafelbild zu erhalten, wobei das Kalibrierungstafelbild eine Vielzahl von ringförmigen Mustern umfasst;
ein zweites Erhaltungsmodul (602), das konfiguriert ist, eine Innenkante und eine Außenkante jedes ringförmigen Musters in dem Kalibriertafelbild zu erhalten;
ein Bestimmungsmodul (603), das konfiguriert ist, Bildkoordinaten eines Mittelpunkts jedes ringförmigen Musters gemäß der Innenkante und der Außenkante jedes ringförmigen Musters zu bestimmen; und
ein Kalibrierungsmodul (604), das konfiguriert ist, interne und externe Parameter einer Kamera gemäß den Bildkoordinaten und entsprechenden Weltkoordinaten des Mittelpunkts jedes ringförmigen Musters zu bestimmen;
wobei das Bestimmungsmodul (603) zu Folgendem konfiguriert ist:
Unterteilen eines Bereichs zwischen der Innenkante und der Außenkante jedes ringförmigen Musters, um eine Vielzahl von geteilten Blöcken zu erhalten;
Berechnen eines Schwerpunkts jedes geteilten Blocks; und
Anpassen der Schwerpunkte der Vielzahl von geteilten Blöcken und Bestimmen der Bildkoordinaten des Mittelpunkts jedes ringförmigen Musters gemäß einem Anpassungsergebnis.

8. Vorrichtung (60) nach Anspruch 7, wobei das zweite Erhaltungsmodul (602) zu Folgendem konfiguriert ist:
Bestimmen einer Innenkante und einer Außenkante jedes ringförmigen Musters in einer Pixelebene gemäß Grauwerten von Pixeln in dem Kalibriertafelbild und Bestimmen der Innenkante und der Außenkante jedes ringförmigen Musters in der Pixelebene als die Innenkante und die Außenkante jedes ringförmigen Musters.

9. Vorrichtung (60) nach Anspruch 7, wobei das zweite Erhaltungsmodul (602) zu Folgendem konfiguriert ist:
Bestimmen einer Innenkante und einer Außenkante jedes ringförmigen Musters in einer Pixelebene gemäß Grauwerten von Pixeln in dem Kalibriertafelbild; und
Durchführen einer Glättungsverarbeitung an der Innenkante und der Außenkante in der Pixelebene, um eine Innenkante und eine Außenkante in einer Subpixelebene zu erhalten, und Bestimmen der Innenkante und der Außenkante in der Subpixelebene als die Innenkante und die Außenkante jedes ringförmigen Musters.

10. Vorrichtung (60) nach einem der Ansprüche 7 bis 9, wobei das Bestimmungsmodul (603) zu Folgendem konfiguriert ist:
Unterteilen des Bereichs zwischen der Innenkante und der Außenkante jedes ringförmigen Musters gemäß einer Normalen der Innenkante und/oder der Außenkante jedes ringförmigen Musters.

11. Vorrichtung (60) nach einem der Ansprüche 7 bis 9, wobei das Kalibrierungsmodul (604) ferner zu Folgendem konfiguriert ist:
Bestimmen einer relativen Positionsbeziehung zwischen den Bildkoordinaten des Mittelpunkts jedes ringförmigen Musters in dem Kalibriertafelbild; und
Bestimmen einer entsprechenden Beziehung zwischen den Bildkoordinaten und den Weltkoordinaten des Mittelpunkts jedes ringförmigen Musters gemäß der relativen Positionsbeziehung und den vorbestimmten Weltkoordinaten des Mittelpunkts jedes ringförmigen Musters in dem Kalibriertafelbild.

12. Vorrichtung (60) nach Anspruch 11, wobei das Kalibrierungsmodul (604) für Folgendes konfiguriert ist:
Bestimmen der internen und externen Parameter der Kamera gemäß der entsprechenden Beziehung zwischen den Bildkoordinaten und den Weltkoordinaten des Mittelpunkts jedes ringförmigen Musters und einer Abbildungsbeziehung zwischen einem Bildkoordinatensystem und einem Weltkoordinatensystem.

13. Computerlesbares Speichermedium, auf dem ein Computerprogramm gespeichert ist, wobei, wenn das Computerprogramm durch einen Prozessor ausgeführt wird, das Verfahren nach einem der Ansprüche 1 bis 6 implementiert wird.

14. Computerprogrammprodukt, umfassend ein Computerprogramm, wobei, wenn das Computerprogramm durch einen Prozessor ausgeführt wird, das Verfahren nach einem der Ansprüche 1 bis 6 implementiert wird.

## Revendications

1. Procédé d'étalonnage de caméra, comprenant :
l'obtention (S101) d'une image de carte d'étalonnage, l'image de carte d'étalonnage comprenant une pluralité de motifs annulaires ;
l'obtention (S102) d'un bord intérieur et d'un bord extérieur de chaque motif annulaire dans l'image de carte d'étalonnage ;
la détermination (S103) des coordonnées d'image d'un point central de chaque motif annulaire en fonction du bord intérieur et du bord extérieur de chaque motif annulaire ; et
la détermination (S104) des paramètres internes et externes d'une caméra en fonction des coordonnées d'image et des coordonnées générales correspondantes du point central de chaque motif annulaire ;
la détermination (S103) des coordonnées d'image du point central de chaque motif annulaire en fonction du bord intérieur et du bord extérieur de chaque motif annulaire comprenant :
la division (S404) d'une zone entre le bord intérieur et le bord extérieur de chaque motif annulaire pour obtenir une pluralité de blocs divisés ;
le calcul (S404) d'un centre de gravité de chaque bloc divisé ; et
l'ajustement (S405) des centres de gravité de la pluralité de blocs divisés, et la détermination des coordonnées d'image du point central de chaque motif annulaire en fonction d'un résultat d'ajustement.

2. Procédé selon la revendication 1, dans lequel l'obtention (S102) du bord intérieur et du bord extérieur de chaque motif annulaire dans l'image de carte d'étalonnage comprend :
la détermination (S402) d'un bord intérieur et d'un bord extérieur de chaque motif annulaire au niveau des pixels en fonction de valeurs de gris de pixels dans l'image de carte d'étalonnage, et la détermination du bord intérieur et du bord extérieur de chaque motif annulaire au niveau des pixels en tant que bord intérieur et bord extérieur de chaque motif annulaire.

3. Procédé selon la revendication 1, dans lequel l'obtention (S102) du bord intérieur et du bord extérieur de chaque motif annulaire dans l'image de carte d'étalonnage comprend :
la détermination (S402) d'un bord intérieur et d'un bord extérieur de chaque motif annulaire au niveau des pixels en fonction de valeurs de gris de pixels dans l'image de carte d'étalonnage ; et
la réalisation (S403) d'un traitement de lissage sur le bord intérieur et le bord extérieur au niveau des pixels pour obtenir un bord intérieur et un bord extérieur au niveau des sous-pixels, et la détermination du bord intérieur et du bord extérieur au niveau des sous-pixels en tant que bord intérieur et bord extérieur de chaque motif annulaire.

4. Procédé selon l'une quelconque des revendications 1 à 3, dans lequel la division (S404) de la zone entre le bord intérieur et le bord extérieur de chaque motif annulaire comprend :
la division de la zone entre le bord intérieur et le bord extérieur de chaque motif annulaire en fonction d'une normale du bord intérieur et/ou du bord extérieur de chaque motif annulaire.

5. Procédé selon l'une quelconque des revendications 1 à 3, comprenant en outre :
la détermination (S406) d'une relation de position relative entre les coordonnées d'image du point central de chaque motif annulaire dans l'image de carte d'étalonnage ; et
la détermination (S407) d'une relation correspondante entre les coordonnées d'image et les coordonnées générales du point central de chaque motif annulaire en fonction de la relation de position relative et des coordonnées générales prédéterminées du point central de chaque motif annulaire dans l'image de carte d'étalonnage.

6. Procédé selon la revendication 5, dans lequel la détermination (S104) des paramètres internes et externes de la caméra en fonction des coordonnées d'image et des coordonnées générales correspondantes du point central de chaque motif annulaire comprend :
la détermination (S408) des paramètres internes et externes de la caméra en fonction de la relation correspondante entre les coordonnées d'image et les coordonnées générales du point central de chaque motif annulaire et d'une relation de mappage entre un système de coordonnées d'image et un système de coordonnées générales.

7. Appareil d'étalonnage de caméra (60), comprenant :
un premier module d'obtention (601), configuré pour obtenir une image de carte d'étalonnage, l'image de carte d'étalonnage comprenant une pluralité de motifs annulaires ;
un second module d'obtention (602), configuré pour obtenir un bord intérieur et un bord extérieur de chaque motif annulaire dans l'image de carte d'étalonnage ;
un module de détermination (603), configuré pour déterminer les coordonnées d'image d'un point central de chaque motif annulaire en fonction du bord intérieur et du bord extérieur de chaque motif annulaire ; et
un module d'étalonnage (604), configuré pour déterminer les paramètres internes et externes d'une caméra en fonction des coordonnées d'image et des coordonnées générales correspondantes du point central de chaque motif annulaire ;
le module de détermination (603) étant configuré pour :
diviser une zone entre le bord intérieur et le bord extérieur de chaque motif annulaire pour obtenir une pluralité de blocs divisés ;
calculer un centre de gravité de chaque bloc divisé ; et
ajuster les centres de gravité de la pluralité de blocs divisés, et déterminer les coordonnées d'image du point central de chaque motif annulaire en fonction d'un résultat d'ajustement.

8. Appareil (60) selon la revendication 7, dans lequel le second module d'obtention (602) est configuré pour :
déterminer un bord intérieur et un bord extérieur de chaque motif annulaire au niveau des pixels en fonction de valeurs de gris de pixels dans l'image de carte d'étalonnage, et déterminer le bord intérieur et le bord extérieur de chaque motif annulaire au niveau des pixels en tant que bord intérieur et bord extérieur de chaque motif annulaire.

9. Appareil (60) selon la revendication 7, dans lequel le second module d'obtention (602) est configuré pour :
déterminer un bord intérieur et un bord extérieur de chaque motif annulaire au niveau des pixels en fonction de valeurs de gris de pixels dans l'image de carte d'étalonnage ; et
réaliser un traitement de lissage sur le bord intérieur et le bord extérieur au niveau des pixels pour obtenir un bord intérieur et un bord extérieur au niveau des sous-pixels, et déterminer le bord intérieur et le bord extérieur au niveau des sous-pixels en tant que bord intérieur et bord extérieur de chaque motif annulaire.

10. Appareil (60) selon l'une quelconque des revendications 7 à 9, dans lequel le module de détermination (603) est configuré pour :
diviser la zone entre le bord intérieur et le bord extérieur de chaque motif annulaire en fonction d'une normale du bord intérieur et/ou du bord extérieur de chaque motif annulaire.

11. Appareil (60) selon l'une quelconque des revendications 7 à 9, dans lequel le module d'étalonnage (604) est en outre configuré pour :
déterminer une relation de position relative entre les coordonnées d'image du point central de chaque motif annulaire dans l'image de carte d'étalonnage ; et
déterminer une relation correspondante entre les coordonnées d'image et les coordonnées générales du point central de chaque motif annulaire en fonction de la relation de position relative et des coordonnées générales prédéterminées du point central de chaque motif annulaire dans l'image de carte d'étalonnage.

12. Appareil (60) selon la revendication 11, dans lequel le module d'étalonnage (604) est configuré pour :
déterminer les paramètres internes et externes de la caméra en fonction de la relation correspondante entre les coordonnées d'image et les coordonnées générales du point central de chaque motif annulaire et d'une relation de mappage entre un système de coordonnées d'image et un système de coordonnées générales.

13. Support de stockage lisible par ordinateur sur lequel un programme informatique est stocké, dans lequel, lorsque le programme informatique est exécuté par un processeur, le procédé selon l'une quelconque des revendications 1 à 6 est mis en œuvre.

14. Produit de programme informatique, comprenant un programme informatique, dans lequel, lorsque le programme informatique est exécuté par un processeur, le procédé selon l'une quelconque des revendications 1 à 6 est mis en œuvre.
